# EUROPEAN PATENT APPLICATION

(11) **EP 4 693 645 A1**
(43) Date of publication of application: **11.02.2026**
(21) Application number: 25180574.3
(22) Date of filing: 03.06.2025
(51) Int. Cl.: H01M 50/202, H01M 50/24, H01M 50/249, H01M 10/6556, H01M 50/204, H01M 50/244, H01M 50/262

(54) **BATTERY BOX AND BATTERY PACK**

(30) Priority: 08.08.2024 CN 202421923907 U; 06.12.2024 WO PCT/CN2024/137477
(71) Applicant: Eve Energy Co., Ltd., Huizhou, Guangdong 516006 (CN)
(72) Inventor: WEN, Shengde, Huizhou, Guangdong, 516006 (CN)
(74) Representative: Biallo, Dario

(57) **Abstract**

Provided are a battery box and a battery pack. The battery box in the battery pack includes a box frame (100), a liquid-cooling plate (200), a protective plate (300), multiple securing connection assemblies, a first layer sealing assembly (400), and a second layer sealing assembly (500). The box frame (100), the liquid-cooling plate (200), and the protective plate (300) are stacked in sequence. At least part of securing connection assemblies are disposed and spaced apart on the edge of the protective plate (300) to securely connect the protective plate (300), the liquid-cooling plate (200), and the box frame (100). The first layer sealing assembly (400) is located between the liquid-cooling plate (200) and the box frame (100) and at least partially disposed around the edge of the liquid-cooling plate (200). The second layer sealing assembly (500) is located between the protective plate (300) and the liquid-cooling plate (200) and at least partially disposed around the edge of the protective plate (300). In this manner, the box frame (100) and the liquid-cooling plate (200) are sealed and secured, and the liquid-cooling plate (200) and the protective plate (300) are sealed and secured so that the structure is compact, and the sealing effects are good, thereby improving the protection of batteries in the battery box.

## Description

### TECHNICAL FIELD

The present application relates to the field of battery technology, for example, to a battery box and a battery pack.

### BACKGROUND

As an essential component in an electric vehicle, a battery pack is used for providing electric energy for the electric vehicle. The battery pack is formed by a battery box and multiple batteries, and the multiple batteries are arranged in series and/or in parallel in the battery box. The battery box includes a box frame, a liquid-cooling plate, and a bottom protective plate that are disposed in sequence from top to bottom. The batteries are accommodated in an accommodation space enclosed by the box frame. The liquid-cooling plate is configured to dissipate heat of the batteries in the accommodation space. The bottom protective plate is used for protecting the liquid-cooling plate.

In the related art, the bottom protective plate is welded and secured to the liquid-cooling plate in a manner of friction stir welding.

In an actual application scenario, due to the poor welding quality between the bottom protective plate and the liquid-cooling plate, a welding failure is prone to occur between the bottom protective plate and the liquid-cooling plate, and sewage or other foreign objects flow into the space between the liquid-cooling plate and the bottom protective plate along a welding gap, causing damage to the liquid-cooling plate. In addition, the box frame and the liquid-cooling plate are connected together by bolts and nuts, and sewage or other foreign objects also easily flow into the batteries within the box frame along the gap between the box frame and the liquid-cooling plate, causing damage to the batteries. The sealing effect between the box frame and the liquid-cooling plate and the sealing effect between the liquid-cooling plate and the bottom protective plate are poor, which greatly affects the service life and use safety of the battery pack.

### SUMMARY

The present application provides a battery box. The battery box includes a box frame, a liquid-cooling plate, a protective plate, a plurality of securing connection assemblies, a first layer sealing assembly, and a second layer sealing assembly.

The box frame, the liquid-cooling plate, and the protective plate are stacked in sequence.

At least part of the plurality of securing connection assemblies are disposed and spaced apart on an edge of the protective plate to securely connect the protective plate, the liquid-cooling plate, and the box frame.

The first layer sealing assembly is located between the liquid-cooling plate and the box frame and at least partially disposed around an edge of the liquid-cooling plate.

The second layer sealing assembly is located between the protective plate and the liquid-cooling plate and at least partially disposed around the edge of the protective plate.

The present application further provides a battery pack. The battery pack includes a plurality of batteries and the battery box, where the plurality of batteries are interconnected through at least one of series connection or parallel connection, and all the plurality of batteries are accommodated in the battery box.

The present application has the beneficial effects below.

In the battery box provided in the present application, the box frame, the liquid-cooling plate, and the protective plate are stacked in sequence, and the multiple securing connection assemblies are disposed to connect and secure the protective plate, the liquid-cooling plate, and the box frame so that batteries can be supported, cooled, and protected. The first layer sealing assembly is disposed between the liquid-cooling plate and the box frame so that the first layer sealing assembly is at least partially disposed around the edge of the liquid-cooling plate, and a gap between the liquid-cooling plate and the box frame can be effectively sealed. The second layer sealing assembly is disposed between the protective plate and the liquid-cooling plate so that the second layer sealing assembly is at least partially disposed around the edge of the protective plate, and a gap between the protective plate and the liquid-cooling plate can be effectively sealed. In this manner, the box frame, the first layer sealing assembly, the liquid-cooling plate, the second layer sealing assembly, and the protective plate in the battery box are stacked and secured in sequence so that the structure is compact. Combined with the sealing of the gap between the liquid-cooling plate and the box frame by the first layer sealing assembly and the sealing of the gap between the liquid-cooling plate and the protective plate by the second layer sealing assembly, the battery box is sealed with good sealing effect, which effectively prevents sewage or other foreign objects from entering the battery box along the gap between the liquid-cooling plate and the box frame or the gap between the liquid-cooling plate and the protective plate, thereby improving the protection of the battery box and the batteries in the battery box.

The present application further provides the battery pack. Through the application of the battery box, the box frame and the liquid-cooling plate are effectively sealed and secured, and the liquid-cooling plate and the protective plate are effectively sealed and secured. In this manner, the structure is compact, and the sealing effects are good so that sewage or other foreign objects can be effectively prevented from entering the battery box along the gap between the liquid-cooling plate and the box frame or the gap between the liquid-cooling plate and the protective plate, thereby improving the protection of the battery box and the batteries in the battery box.

### BRIEF DESCRIPTION OF DRAWINGS

FIG. 1 is an axonometric view of a battery box according to some embodiments of the present application.
FIG. 2 is an exploded view of a battery box according to some embodiments of the present application.
FIG. 3 is a cross-sectional view of a battery box according to some embodiments of the present application.
FIG. 4 is a view illustrating the structure of a battery box without a protective plate according to some embodiments of the present application.
FIG. 5 is a partial enlarged view of part A of FIG. 3.
FIG. 6 is a partial enlarged view of part B in FIG. 5.
FIG. 7 is a partial enlarged view of part C of FIG. 5.
FIG. 8 is a partial enlarged view of part D of FIG. 4.

### Reference list

- 1000: battery box
- 100: box frame
- 110: peripheral frame structure
- 111: recess
- 112: storage chamber
- 113: electrical chamber
- 120: partition baffle
- 130: support beam
- 200: liquid-cooling plate
- 210: liquid inlet channel
- 220: liquid outlet channel
- 300: protective plate
- 400: first layer sealing assembly
- 410: first sealing member
- 420: second sealing member
- 500: second layer sealing assembly
- 510: third sealing member
- 520: support mating member
- 521: annular accommodation groove
- 530: fourth sealing member
- 600: second securing connection assembly
- 610: first securing member
- 611: threaded hole
- 620: second securing member
- 700: first securing connection assembly

### DETAILED DESCRIPTION

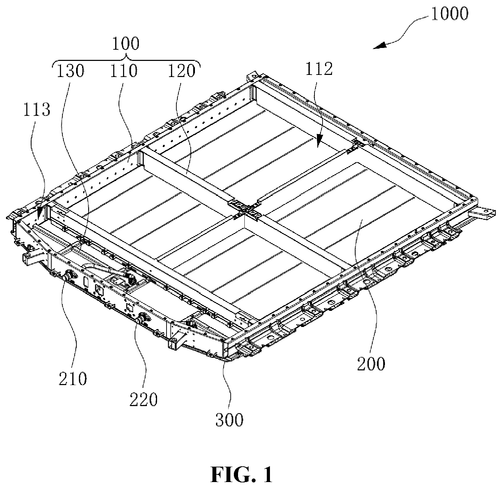

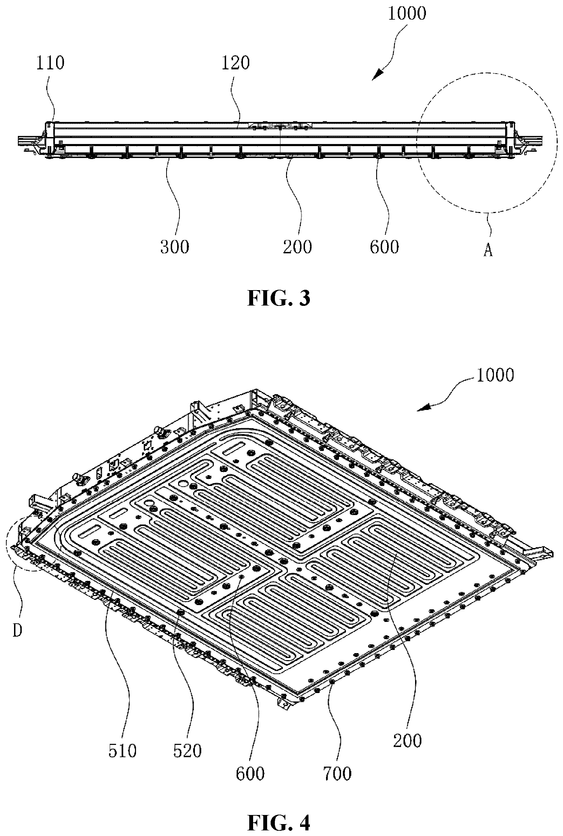

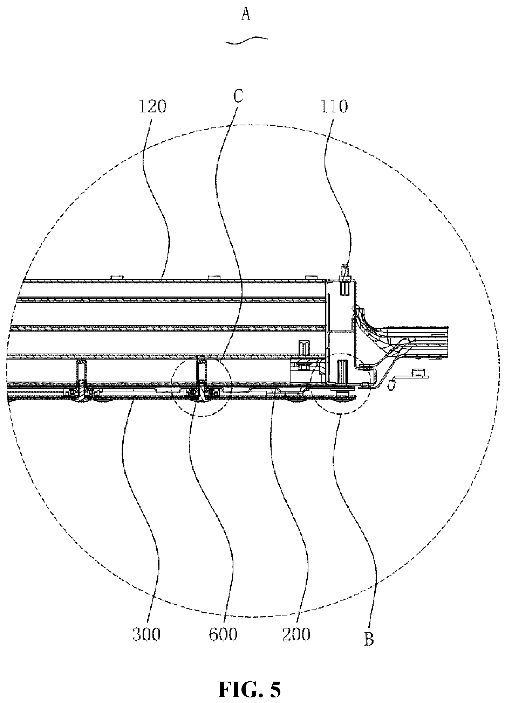

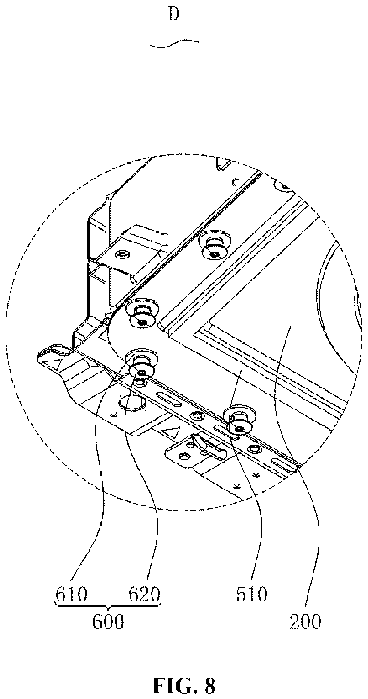

As shown in FIGS. 1 to 8, this embodiment provides a battery box 1000. The battery box 1000 includes a box frame 100, a liquid-cooling plate 200, a protective plate 300, multiple securing connection assemblies, a first layer sealing assembly 400, and a second layer sealing assembly 500. The box frame 100, the liquid-cooling plate 200, and the protective plate 300 are stacked in sequence. At least part of securing connection assemblies are disposed and spaced apart on the edge of the protective plate 300 to securely connect the protective plate 300, the liquid-cooling plate 200, and the box frame 100. The first layer sealing assembly 400 is located between the liquid-cooling plate 200 and the box frame 100 and at least partially disposed around the edge of the liquid-cooling plate 200. The second layer sealing assembly 500 is located between the protective plate 300 and the liquid-cooling plate 200 and at least partially disposed around the edge of the protective plate 300.

In the battery box 1000, the box frame 100, the liquid-cooling plate 200, and the protective plate 300 are stacked in sequence, and the multiple securing connection assemblies are disposed to connect and secure the protective plate 300, the liquid-cooling plate 200, and the box frame 100 so that batteries can be supported, cooled, and protected. The first layer sealing assembly 400 is disposed between the liquid-cooling plate 200 and the box frame 100 so that the first layer sealing assembly 400 is at least partially disposed around the edge of the liquid-cooling plate 200, and a gap between the liquid-cooling plate 200 and the box frame 100 can be effectively sealed. The second layer sealing assembly 500 is disposed between the protective plate 300 and the liquid-cooling plate 200 so that the second layer sealing assembly 500 is at least partially disposed around the edge of the protective plate 300, and a gap between the protective plate 300 and the liquid-cooling plate 200 can be effectively sealed. In this manner, the box frame 100, the first layer sealing assembly 400, the liquid-cooling plate 200, the second layer sealing assembly 500, and the protective plate 300 in the battery box 1000 are stacked and secured in sequence so that the structure is compact. Combined with the sealing of the gap between the liquid-cooling plate 200 and the box frame 100 by the first layer sealing assembly 400 and the sealing of the gap between the liquid-cooling plate 200 and the protective plate 300 by the second layer sealing assembly 500, the battery box 1000 is sealed with good sealing effect, which effectively prevents sewage or other foreign objects from entering the battery box 1000 along the gap between the liquid-cooling plate 200 and the box frame 100 or the gap between the liquid-cooling plate 200 and the protective plate 300, thereby improving the protection of the battery box 1000 and the batteries in the battery box 1000.

In this embodiment, the protective plate 300, the liquid-cooling plate 200, and the box frame 100 are stacked in sequence from bottom to top to support the batteries in the battery box 1000. In other embodiments, the stacking direction of the box frame 100, the liquid-cooling plate 200, and the protective plate 300 may also be adjusted according to actual needs, which is not specifically limited in this embodiment.

As an optional solution, the box frame 100 includes a peripheral frame structure 110 and partition baffles 120 securely connected within the peripheral frame structure 110; the multiple securing connection assemblies include multiple first securing connection assemblies 700 and multiple second securing connection assemblies 600. The multiple first securing connection assemblies 700 are configured to securely connect the protective plate 300, the liquid-cooling plate 200, and the peripheral frame structure 110, and the multiple second securing connection assemblies 600 are configured to securely connect the protective plate 300, the liquid-cooling plate 200, and the partition baffles 120. By splitting the box frame 100 into the peripheral frame structure 110 and the partition baffles 120 securely connected within the peripheral frame structure 110, the space within the peripheral frame structure 110 can be split into multiple independent partitions to facilitate subsequent battery storage. By using the multiple first securing connection assemblies 700 to securely connect the protective plate 300, the liquid-cooling plate 200, and the peripheral frame structure 110 and using the multiple second securing connection assemblies 600 to securely connect the protective plate 300, the liquid-cooling plate 200, and the partition baffles 120, the protective plate 300 and the liquid-cooling plate 200 can be securely connected to the peripheral frame structure 110 and the partition baffles 120 respectively.

In this embodiment, the first securing connection assembly 700 includes a blind rivet, and the protective plate 300, the liquid-cooling plate 200, and the peripheral frame structure 110 are riveted and secured by using blind rivets. The second securing connection assembly 600 includes a blind rivet, and the protective plate 300, the liquid-cooling plate 200, and the partition baffles 120 are riveted and secured by using blind rivets. In the present application, the blind rivet and riveting principle in the related art may be used for riveting and securing.

The partition baffles 120 can divide an accommodation chamber within the peripheral frame structure 110 into at least two independent sub-chambers, and the at least two sub-chambers include at least one electrical chamber 113 and at least one storage chamber 112. The batteries are accommodated in the at least one storage chamber 112, and wiring harnesses are accommodated in the at least one electrical chamber 113. By splitting the box frame 100 into the peripheral frame structure 110 and the partition baffles 120, the first securing connection assemblies 700 connect and secure the peripheral frame structure 110 and the liquid-cooling plate 200, and the second securing connection assemblies 600 connect and secure the partition baffles 120 and the liquid-cooling plate 200, thereby ensuring the sealing and securing effect of the box frame 100 and the liquid-cooling plate 200. By using the partition baffles 120 to split the accommodation chamber within the peripheral frame structure 110 into the at least two sub-chambers, the at least two sub-chambers include the at least one storage chamber 112 configured to store the batteries and the at least one electrical chamber 113 configured to accommodate the wiring harnesses, thereby ensuring the storage safety of the batteries and the wiring harnesses. In this embodiment, the accommodation chamber within the peripheral frame structure 110 is divided into one electrical chamber 113 and four storage chambers 112 by the partition baffles 120. In other embodiments, the specific number of electrical chambers 113 and the specific number of storage chambers 112 may also be adjusted according to actual needs.

In addition, to improve space utilization, as shown in FIG. 1, in this embodiment, a liquid inlet channel 210 and a liquid outlet channel 220 on the liquid-cooling plate 200 are both accommodated in the electrical chamber 113 and communicate with the outside.

The peripheral frame structure 110 is made of steel, and the partition baffles 120 are made of aluminum, thereby forming the box frame 100 whose structure is made of steel and aluminum. By using steel to make the peripheral frame structure 110, the structural strength of the peripheral frame structure 110 can be ensured, and the peripheral frame structure 110 can be prevented from being deformed by force. By using aluminum to make the partition baffles 120, the weight of the box frame 100 can be reduced, and while actual strength requirements and installation requirements are satisfied, the product weight can be reduced, and the production cost can be saved.

To improve the structural strength of the electrical chamber 113, the box frame 100 further includes a support beam 130. The support beam 130 is supported between chamber walls of the electrical chamber 113 by welding and riveting. By disposing the support beam 130 and supporting the support beam 130 between the chamber walls of the electrical chamber 113 by welding and riveting, the structural strength of the electrical chamber 113 is ensured, and the batteries in the storage chambers 112 are prevented from squeezing and damaging the electrical chamber 113 due to expansion. Planar extensions are formed at two axial ends of the support beam 130 respectively. The planar extensions are in contact with the chamber walls of the electrical chamber 113 and connected and secured to the chamber walls of the electrical chamber 113 by welding or riveting.

In an optional embodiment, the first layer sealing assembly 400 includes a first sealing member 410; a portion of the first sealing member 410 is disposed corresponding to the first securing connection assemblies 700, and the remaining portion of the first sealing member 410 is disposed corresponding to the second securing connection assemblies 600. The portion of the first sealing member 410 within the first layer sealing assembly 400 is disposed corresponding to the first securing connection assemblies 700, and the remaining portion of the first sealing member 410 within the first layer sealing assembly 400 is disposed corresponding to the second securing connection assemblies 600 so that the first sealing member 410 can not only seal the peripheral frame structure 110 and the liquid-cooling plate 200 but also seal the partition baffles 120 and the liquid-cooling plate 200.

The first securing connection assemblies 700 sequentially penetrate the protective plate 300, the liquid-cooling plate 200, and the first sealing member 410 and are securely connected to the peripheral frame structure 110 so that the first sealing member 410 can seal the liquid-cooling plate 200 and the peripheral frame structure 110. The second securing connection assemblies 600 sequentially penetrate the liquid-cooling plate 200 and the first sealing member 410 and are securely connected to the partition baffles 120 so that the first sealing member 410 can seal the liquid-cooling plate 200 and the partition baffles 120. In this embodiment, the first sealing member 410 is a rubber gasket that has good elasticity, toughness and wear resistance and a long service life. When the first securing connection assemblies 700 securely connect the liquid-cooling plate 200 to the peripheral frame structure 110, or the second securing connection assemblies 600 securely connect the liquid-cooling plate 200 to the partition baffles 120, the rubber gasket can be compressed and sandwiched between the liquid-cooling plate 200 and the peripheral frame structure 110 or between the liquid-cooling plate 200 and the partition baffles 120 so that the rubber gasket can be fully filled in the gap between the liquid-cooling plate 200 and the peripheral frame structure 110 or between the liquid-cooling plate 200 and the partition baffles 120, thereby sealing the liquid-cooling plate 200 and the peripheral frame structure 110 or sealing the liquid-cooling plate 200 and the partition baffles 120.

To improve the sealing effect between the peripheral frame structure 110 and the liquid-cooling plate 200, the first layer sealing assembly 400 further includes a second sealing member 420 that is annular. The second sealing member 420 is located between the liquid-cooling plate 200 and the peripheral frame structure 110 and is located within the annular range enclosed by all the first securing connection assemblies 700. The second sealing member 420 is disposed within the annular range enclosed by the first securing connection assemblies 700, and the second sealing member 420 is disposed between the liquid-cooling plate 200 and the peripheral frame structure 110 so that an additional layer sealing structure can be provided on the basis of the first sealing member 410 sealing the liquid-cooling plate 200 and the peripheral frame structure 110, so as to prevent external water vapor or debris from entering the accommodation chamber within the peripheral frame structure 110 along the gap between the peripheral frame structure 110 and the liquid-cooling plate 200. In this embodiment, the second sealing member 420 is a sealant. After the first securing connection assemblies 700 securely connect the liquid-cooling plate 200, the first sealing member 410, and the peripheral frame structure 110, the sealant is filled between the peripheral frame structure 110 and the liquid-cooling plate 200 along an annular inner ring enclosed by the first securing connection assemblies 700. It is to be understood that in other embodiments, the second sealing member 420 may also be disposed between two sides of a partition baffle 120 of the partition baffles 120 and the liquid-cooling plate 200, which is not specifically limited in this embodiment.

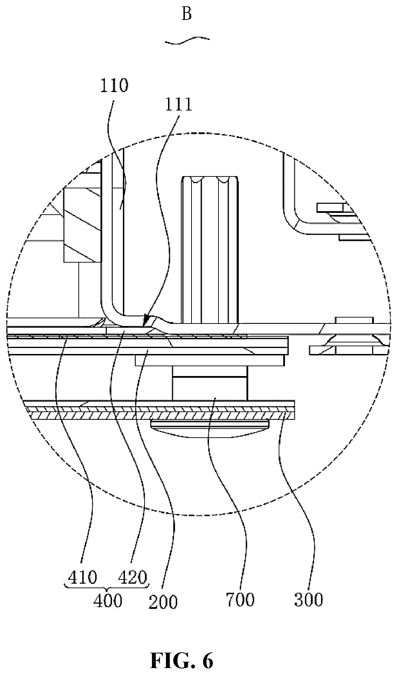

As shown in FIG. 6, a surface of the peripheral frame structure 110 facing the liquid-cooling plate 200 is formed with a recess 111, and/or a surface of the liquid-cooling plate 200 facing the peripheral frame structure 110 is formed with a recess 111; the recess 111 is configured to accommodate the second sealing member 420. The surface of the peripheral frame structure 110 facing the liquid-cooling plate 200 and/or the surface of the liquid-cooling plate 200 facing the peripheral frame structure 110 is formed with the recess 111, and the second sealing member 420 is accommodated in the recess 111 so that the second sealing member 420 can be accommodated, the protection of the second sealing member 420 can be improved, and the second sealing member 420 can be prevented from falling off from between the peripheral frame structure 110 and the liquid-cooling plate 200. In this embodiment, the surface of the peripheral frame structure 110 facing the liquid-cooling plate 200 may be formed with the recess 111. In other embodiments, an end surface of the liquid-cooling plate 200 facing the peripheral frame structure 110 may also be formed with the recess 111, or the surface of the peripheral frame structure 110 facing the liquid-cooling plate 200 and the surface of the liquid-cooling plate 200 facing the peripheral frame structure 110 are each formed with the recess 111, which is not specifically limited in this embodiment.

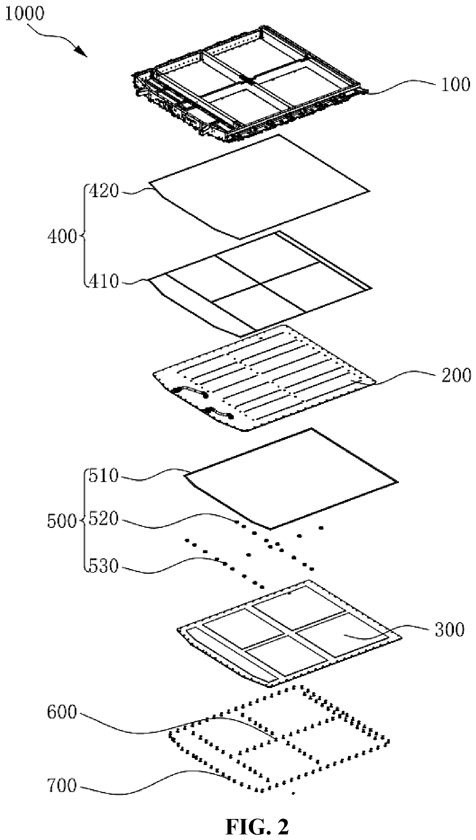

As an optional solution, as shown in FIG. 2, the second layer sealing assembly 500 includes a third sealing member 510 that is annular and located within the annular range enclosed by all the first securing connection assemblies 700. The annular third sealing member 510 is disposed within the second layer sealing assembly 500 and within the annular range enclosed by all the first securing connection assemblies 700 so that the sealing effect of the third sealing member 510 on the liquid-cooling plate 200 and the protective plate 300 can not only be ensured, but the protection of the third sealing member 510 can also be improved. In this embodiment, the third sealing member 510 is a rubber gasket that has good elasticity, toughness and wear resistance and a long service life. When the first securing connection assemblies 700 securely connect the liquid-cooling plate 200 to the protective plate 300, the rubber gasket can be compressed and sandwiched between the liquid-cooling plate 200 and the protective plate 300 so that the rubber gasket can be fully filled in the gap between the liquid-cooling plate 200 and the protective plate 300, thereby sealing the liquid-cooling plate 200 and the protective plate 300.

In an optional embodiment, a surface of the liquid-cooling plate 200 facing the protective plate 300 is formed with a groove, and/or a surface of the protective plate 300 facing the liquid-cooling plate 200 is formed with a groove; the groove is configured to accommodate the third sealing member 510. The surface of the protective plate 300 facing the liquid-cooling plate 200 and/or the surface of the liquid-cooling plate 200 facing the protective plate 300 is formed with the groove so that the third sealing member 510 can be accommodated in the groove, thereby accommodating the third sealing member 510 and improving the protection of the third sealing member 510.

In this embodiment, the surface of the liquid-cooling plate 200 facing the protective plate 300 and the surface of the protective plate 300 facing the liquid-cooling plate 200 are formed with no groove so as to simplify the processing steps of the liquid-cooling plate 200 and the protective plate 300.

In this embodiment, the protective plate 300 is made of glass fiber and resin, and the glass fiber and the resin are coated in sequence by coating to make the protective plate 300. The produced protective plate 300 has good fire resistance and deformation resistance without additional processing.

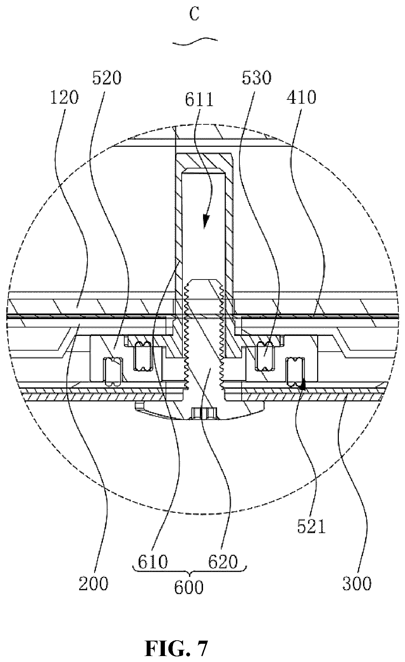

As an optional solution, as shown in FIG. 7, the second securing connection assembly 600 includes multiple first securing members 610 and multiple second securing members 620. The first securing members 610 are configured to connect and secure the protective plate 300 and the liquid-cooling plate 200 from one end of the liquid-cooling plate 200 facing away from the box frame 100, and a surface of the first securing member 610 facing the protective plate 300 is formed with a threaded hole 611. The second securing member 620 is configured to penetrate the protective plate 300 from one end of the protective plate 300 facing away from the liquid-cooling plate 200 and be threadedly secured to the threaded hole 611.

When it is necessary to securely connect the partition baffles 120, the liquid-cooling plate 200, and the protective plate 300, the first securing member 610 sequentially penetrates the liquid-cooling plate 200 and the first sealing member 410 from one end of the liquid-cooling plate 200 facing away from the partition baffles 120, and then a protruding end of the first securing member 610 is connected and secured to the partition baffles 120. Subsequently, the third sealing member 510 and the protective plate 300 are sequentially disposed at a lower end of the liquid-cooling plate 200, and then the second securing member 620 is used for penetrating the liquid-cooling plate 200 from the end of the protective plate 300 facing away from the liquid-cooling plate 200 and being threadedly secured to the threaded hole 611 on the first securing member 610 to securely connect the liquid-cooling plate 200, the third sealing member 510, and the protective plate 300, thereby sequentially securely connect the partition baffles 120, the first sealing member 410, the liquid-cooling plate 200, the third sealing member 510, and the protective plate 300. Consequently, the structure is compact, and the sealing effect is good.

To improve the sealing effect between the second securing member 620 and the threaded hole 611 on the first securing member 610, the second layer sealing assembly 500 further includes fourth sealing members 530, and the fourth sealing member has an annular shape. The fourth sealing members 530 are located between the liquid-cooling plate 200 and the protective plate 300 and are sleeved on the outer circumference of the second securing member 620. The fourth sealing members 530 are disposed between the liquid-cooling plate 200 and the protective plate 300 and are sleeved on the outer circumference of the second securing members 620 so that gaps between the threaded holes 611 and the second securing members 620 located within the fourth sealing members 530 can be effectively sealed. In this embodiment, the fourth sealing member 530 is a rubber gasket. The rubber gasket has good elasticity, toughness, and wear resistance.

In this embodiment, the first securing member 610 is a blind rivet, and the second securing member 620 is a bolt. A riveting end of the blind rivet sequentially penetrates the liquid-cooling plate 200 and the first sealing member 410 from the end of the liquid-cooling plate 200 facing away from the partition baffles 120 and then is riveted and secured to the partition baffles 120. A surface of the blind rivet facing the protective plate 300 is formed with a threaded hole 611, and the bolt penetrates the liquid-cooling plate 200 from the end of the protective plate 300 facing away from the liquid-cooling plate 200 and is threadedly secured to the threaded hole 611 on the blind rivet. In other embodiments, the first securing member 610 may also be a bolt, and a threaded hole matching the bolt is formed on the partition baffle 120. When the first securing member 610 is required to secure the liquid-cooling plate 200 and the partition baffle 120, a threaded end of the bolt sequentially penetrates the liquid-cooling plate 200 and the first sealing member 410 from the end of the liquid-cooling plate 200 facing away from the partition baffle 120 and then is threadedly secured to the threaded hole on the partition baffle 120.

In this embodiment, the specific structure of the first securing connection assembly 700 is the same as the specific structure of the second securing connection assembly 600, and details are not repeated herein in order to ensure the brevity of the present application. In addition, in other embodiments, the first securing connection assembly 700 may also be a single bolt or a single blind rivet that sequentially connects and secures the protective plate 300, the liquid-cooling plate 200, and the peripheral frame structure 110. The second securing connection assembly 600 may also be a single bolt or a single blind rivet that sequentially rivets and secures the protective plate 300, the liquid-cooling plate 200, and the partition baffle 120. These are not specifically limited in this embodiment.

In an actual application scenario, since the annular third sealing member 510 is disposed at the contour edge of the liquid-cooling plate 200, the central region of the liquid-cooling plate 200 and the central region of the protective plate 300 are supported by the fourth sealing members 530, but the central region of the protective plate 300 is easily protruded or recessed relative to the liquid-cooling plate 200, which greatly affects the service life of the protective plate 300. To ensure the structural strength of a gap between an end surface of the liquid-cooling plate 200 adjacent to the protective plate 300 and an end surface of the protective plate 300 adjacent to the liquid-cooling plate 200, where the liquid-cooling plate 200 is located at the central position, as shown in FIG. 7, the second layer sealing assembly 500 further includes support docking members 520, and the support docking members 520 has an annular shape and located between the liquid-cooling plate 200 and the protective plate 300; the fourth sealing members 530 are sandwiched between the support docking members 520 and the liquid-cooling plate 200, and/or the fourth sealing members 530 are sandwiched between the support docking members 520 and the protective plate 300. The support docking members 520 are disposed between the liquid-cooling plate 200 and the protective plate 300 so that the support docking members 520 are sleeved on the outer circumference of the second securing members 620, and the fourth sealing members 530 are sandwiched between the support docking members 520 and the liquid-cooling plate 200 and between the support docking members 520 and the protective plate 300 to prevent the protective plate 300 in the central region from being protruded or recessed relative to the liquid-cooling plate 200, thereby improving the protection of the protective plate 300.

Surfaces of the support docking members 520 facing the liquid-cooling plate 200 and surfaces of the support docking members 520 facing the protective plate 300 are each formed with an annular accommodation groove 521, and the fourth sealing members 530 are accommodated in the annular accommodation grooves 521 respectively to accommodate and position the fourth sealing members 530. Consequently, the structure is simple, and the positioning effect is good. In this embodiment, the support docking member 520 is a gasket. An avoidance hole for the second securing member 620 to pass through is formed within the gasket. The surfaces of the gaskets facing the liquid-cooling plate 200 and the surfaces of the gaskets facing the protective plate 300 are each formed with the annular accommodation groove 521. The annular accommodation groove 521 is disposed concentrically with the avoidance hole. In other embodiments, the support docking member 520 may also be another cylindrical structure having the avoidance hole, which is not specifically limited in this embodiment.

This embodiment further provides a battery pack. The battery pack includes multiple batteries and the battery box 1000. The multiple batteries are connected in series and/or in parallel, and all the multiple batteries are accommodated in the storage chambers 112 within the battery box 1000. In the battery pack, through the application of the battery box 1000, the box frame 100 and the liquid-cooling plate 200 are effectively sealed and secured, and the liquid-cooling plate 200 and the protective plate 300 are effectively sealed and secured so that the structure is compact, and the sealing effects are good, thereby improving the protection of the batteries within the battery box 1000.

## Claims

1. A battery box, comprising:
a box frame (100), a liquid-cooling plate (200), and a protective plate (300) that are stacked in sequence;
a plurality of securing connection assemblies, wherein at least part of the plurality of securing connection assemblies are disposed and spaced apart on an edge of the protective plate (300) to securely connect the protective plate (300), the liquid-cooling plate (200), and the box frame (100);
a first layer sealing assembly (400) located between the liquid-cooling plate (200) and the box frame (100) and at least partially disposed around an edge of the liquid-cooling plate (200); and
a second layer sealing assembly (500) located between the protective plate (300) and the liquid-cooling plate (200) and at least partially disposed around the edge of the protective plate (300).

2. The battery box according to claim 1, wherein the box frame (100) comprises a peripheral frame structure (110) and a partition baffle (120) securely connected within the peripheral frame structure (110); and
the plurality of securing connection assemblies comprise a plurality of first securing connection assemblies (700) and a plurality of second securing connection assemblies (600),
wherein the plurality of first securing connection assemblies (700) are configured to securely connect the protective plate (300), the liquid-cooling plate (200), and the peripheral frame structure (110); and
the plurality of second securing connection assemblies (600) are configured to securely connect the protective plate (300), the liquid-cooling plate (200), and the partition baffle (120).

3. The battery box according to claim 2, wherein the first layer sealing assembly (400) comprises a first sealing member (410), wherein a portion of the first sealing member (410) is disposed corresponding to the plurality of first securing connection assemblies (700), and a remaining portion of the first sealing member (410) is disposed corresponding to the plurality of second securing connection assemblies (600).

4. The battery box according to claim 3, wherein the first layer sealing assembly (400) further comprises a second sealing member (420) that is annular, wherein the second sealing member (420) is located between the liquid-cooling plate (200) and the peripheral frame structure (110), and the second sealing member (420) is located within an annular range enclosed by all the first securing connection assemblies (700).

5. The battery box according to claim 4, wherein at least one of a surface of the peripheral frame structure (110) facing the liquid-cooling plate (200) or a surface of the liquid-cooling plate (200) facing the peripheral frame structure (110) is formed with a recess (111), wherein the recess (111) is configured to accommodate the second sealing member (420).

6. The battery box according to any one of claims 2 to 5, wherein the second layer sealing assembly (500) comprises a third sealing member (510) that is annular, wherein the third sealing member (510) is located within the annular range enclosed by all the first securing connection assemblies (700).

7. The battery box according to claim 6, wherein at least one of a surface of the liquid-cooling plate (200) facing the protective plate (300) or a surface of the protective plate (300) facing the liquid-cooling plate (200) is formed with a groove, wherein the groove is configured to accommodate the third sealing member (510).

8. The battery box according to claim 7, wherein the second layer sealing assembly (500) further comprises:
a fourth sealing member (530) that is annular and sleeved on an outer circumference of a second securing connection assembly (600) of the plurality of second securing connection assemblies (600).

9. The battery box according to claim 8, wherein the second layer sealing assembly (500) further comprises:
a support mating member (520), wherein the support mating member (520) is annular and located between the liquid-cooling plate (200) and the protective plate (300), and the fourth sealing member (530) is sandwiched between the support mating member (520) and the liquid-cooling plate (200); and the fourth sealing member (530) is sandwiched between the support mating member (520) and the protective plate (300).

10. The battery box according to claim 1, wherein a securing connection assembly of the plurality of securing connection assemblies comprises:
a first securing member (610) configured to connect and secure the protective plate (300) and the liquid-cooling plate (200) from one end of the liquid-cooling plate (200) facing away from the box frame (100); and
a second securing member (620), wherein a surface of the first securing member (610) facing the protective plate (300) is formed with a threaded hole (611), and the second securing member (620) is configured to penetrate the protective plate (300) from one end of the protective plate (300) facing away from the liquid-cooling plate (200) and be threadedly secured to the threaded hole (611).

11. A battery pack, comprising a plurality of batteries and the battery box of any one of claims 1 to 10, wherein the plurality of batteries are interconnected through at least one of series connection or parallel connection, and the plurality of batteries are accommodated in the battery box.
